# EUROPEAN PATENT SPECIFICATION

(11) **EP 3 943 038 B1**
(45) Date of publication and mention of the grant of the patent: **01.03.2023**
(21) Application number: 20186755.3
(22) Date of filing: 20.07.2020
(51) Int. Cl.: A61C 5/00, A61C 7/08

(54) **METHOD FOR MANUFACTURING A DENTAL SPLINT**
VERFAHREN ZUR HERSTELLUNG EINER ZAHNSCHIENE
PROCÉDÉ DE FABRICATION D'UNE GOUTTIÈRE DENTAIRE

(43) Date of publication of application: 26.01.2022
(73) Proprietor: Universität Heidelberg, 69117 Heidelberg (DE)
(72) Inventor: Rues, Stefan, 69221 Dossenheim (DE); Zenthöfer, Andreas, 69115 Heidelberg (DE)
(74) Representative: Altmann Stößel Dick Patentanwälte PartG mbB

(56) References cited:
- WO-A1-2016/143982
- JP-B1- 6 723 549
- US-A1- 2003 190 575

## Description

### Technical Field

The present invention relates to a computer implemented method for manufacturing a dental splint with guiding function for interdental brushes

### Background art

Oral hygienic measures not only includes the use of toothbrushes but also includes the use of so-called interdental brushes. Such interdental brushes are used in order to clean the interdental space between adjacent teeth. However, many patients have difficulties with inserting the interdental brushes into the space between adjacent teeth even with using holders or supports for the interdental brushes. The incorrect use of the interdental brushes involves injuries of the gingiva or insufficient cleaning effects.

US2003190575 discloses an orthodontic aligner system with the outer shell having openings thereon.

### Problem to be solved

It is therefore desirable to provide a computer implemented method for manufacturing a dental splint and to a dental splint which at least partially overcomes shortcomings of known devices and methods for cleaning the interdental space. Specifically, a computer implemented method for manufacturing a dental splint and to a dental splint which correctly and reliably facilitates insertion of an interdental brush into the interdental space between adjacent teeth.

### Summary of the invention

The invention is as defined in the appended claims.

This problem is addressed by a computer implemented method for manufacturing a dental splint and a dental splint with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a computer implemented method for manufacturing a dental splint is disclosed.

The term "dental splint" as used herein is a broad term and is to be given its ordinary and customary meaning to a person of ordinary skill in the art and is not to be limited to a special or customized meaning. The term specifically may refer, without limitation, to several types of orthodontic devices that are designed to address dental problems such as loose teeth and bruxism, in addition to problems with snoring and apnea. Dental splints are fitted by a dentist who ensures that the splint conforms to the patient's teeth, and they may vary in cost depending on which type of splint is used and its planned application.

The method includes making at least one image of a patient's teeth and gingiva. The term "making an image" as used herein is a broad term and is to be given its ordinary and customary meaning to a person of ordinary skill in the art and is not to be limited to a special or customized meaning. The term specifically may refer, without limitation, to making a dental imprint of the teeth and gingiva, making a photo of the teeth such as a digital or analogous photo or scanning the teeth and gingiva. The image may be a three dimensional image. The image may be formed from a plurality of separate or single images.

The method further includes designing a model of the dental splint based on the image of the patient's teeth and gingiva by means of a computer. The term "designing a model" as used herein is a broad term and is to be given its ordinary and customary meaning to a person of ordinary skill in the art and is not to be limited to a special or customized meaning. The term specifically may refer, without limitation, to the process of creating a data model for an information system by applying certain formal techniques so as to provide a digital copy of a real object. Such a digital copy includes a digital three dimensional image of the modelled object. Thus, in the present case, a digital copy of the dental splint is provided which is adapted with its shape to conform to the patient's teeth and gingiva.

The method further includes defining insertion axes for insertion of interdental brushes within each space between approximal tooth surfaces of the patient's teeth in the model by means of the computer.

The term "insertion axis" as used herein is a broad term and is to be given its ordinary and customary meaning to a person of ordinary skill in the art and is not to be limited to a special or customized meaning. The term specifically may refer, without limitation, to an axis along which an interdental brush is inserted into the space between approximal tooth surfaces in use. The insertion axis may be an imaginary axis. The insertion axis may be defined by means of a computer program illustrating the insertion axis in the image or designed model as a drawing line.

The term "approximal tooth surface" as used herein is a broad term and is to be given its ordinary and customary meaning to a person of ordinary skill in the art and is not to be limited to a special or customized meaning. The term specifically may refer, without limitation, to a surface of a tooth facing an adjacent tooth in the dental arch.

The term "interdental brush" as used herein is a broad term and is to be given its ordinary and customary meaning to a person of ordinary skill in the art and is not to be limited to a special or customized meaning. The term specifically may refer, without limitation, to a small brush, typically disposable, either supplied with a reusable angled plastic handle or an integral handle, used for cleaning between teeth and between the wires of dental braces and the teeth.

The method further includes defining insertion holes for insertion of interdental brushes along the insertion axes by means of the computer. The term "insertion hole" as used herein is a broad term and is to be given its ordinary and customary meaning to a person of ordinary skill in the art and is not to be limited to a special or customized meaning. The term specifically may refer, without limitation, to a hole into which an interdental brush may be inserted in use. The insertion hole may be formed similar to a channel.

The method further includes making the dental splint including the defined insertion holes at least partially by means of an additive manufacturing method under control of the computer.

The term "additive manufacturing method" as used herein is a broad term and is to be given its ordinary and customary meaning to a person of ordinary skill in the art and is not to be limited to a special or customized meaning. The term specifically may refer, without limitation, to a method for the construction of a three-dimensional object from a CAD model or a digital 3D model. The term can refer to a variety of processes in which material is joined or solidified under computer control to create a three-dimensional object with material being added together (such as liquid molecules or powder grains being fused together), typically layer by layer.

With the disclosed method, a dental splint may be manufactured which comprises insertion holes facilitating the insertion of interdental brushes which conform to the patient's teeth. Thus, the cleaning effect is improved and any injuries to the gingiva are reliably prevented.

The method may further comprise obtaining digital image data from the image and designing the model based on the digital image data by means of the computer. The term "obtain digital" as used herein is a broad term and is to be given its ordinary and customary meaning to a person of ordinary skill in the art and is not to be limited to a special or customized meaning. The term specifically may refer, without limitation, to the acquisition, conversion or creation of digital data. Thus, the image is digitalized and converted into a computer model such as a CAD model or the like.

The method may further comprise defining the insertion axes based on an uppermost position of the gingiva within the the space between the approximal tooth surfaces from the image, particularly based on an uppermost buccal position of the gingiva and/or an uppermost oral position of the gingiva. Thus, it is ensured that the insertion holes in the manufactured dental splint will not intersect the gingiva but pass the same. Thereby, any injuries of the gingiva by the interdental brush are reliably prevented.

The term "uppermost position of the gingiva" as used herein is a broad term and is to be given its ordinary and customary meaning to a person of ordinary skill in the art and is not to be limited to a special or customized meaning. The term specifically may refer, without limitation, to the highest position of the gingiva as seen in an occlusal or incisal direction.

The method may further comprise defining the insertion holes so as to taper towards the space between the approximal tooth surfaces. Thereby, the interdental brush is guided to its target position and direction when being inserted.

The method may further comprise defining the insertion holes by means of defining virtual punching dies forming the insertion holes.

The term "punching die" as used herein is a broad term and is to be given its ordinary and customary meaning to a person of ordinary skill in the art and is not to be limited to a special or customized meaning. The term specifically may refer, without limitation, to any tool configured to form a hole. The term may further refer to a specialized tool used to cut or shape material mostly using a press. The punching die is used in a virtual punching process. Punching is a forming process that uses a punch press to force a tool, called a punch, through the workpiece to create a hole via shearing. Needless to say, the punching die is a virtual tool.

The virtual punching dies may be defined substantially cone-shaped or truncated cone-shaped. Thereby, the insertion holes become a cone or truncated cone shape. A cone is a three-dimensional geometric shape that tapers smoothly from a flat base (frequently, though not necessarily, circular) to a point called the apex or vertex.

The virtual punching dies may be defined substantially rotationally symmetrical. For example, the punching dies may be a circular cone or circular truncated cone.

The method may further comprise using an intersection point of the insertion axes with an inner surface of the model of the dental splint as reference points for the position of the punching dies and orienting the punching dies with respect to the insertion axes. Thus, it is ensured that the punching dies correctly and concentrically extend along the insertion axes.

The virtual punching dies may be moved from a reference position to final positions defined by means of insertion axes and reference points using rotation matrices and displacements calculated by the computer. The term "rotation matrix" as used herein is a broad term and is to be given its ordinary and customary meaning to a person of ordinary skill in the art and is not to be limited to a special or customized meaning. The term specifically may refer, without limitation, to the calculation of rotations necessary to move an object from one position in 3D space to another position.

The term "displacement" as used herein is a broad term and is to be given its ordinary and customary meaning to a person of ordinary skill in the art and is not to be limited to a special or customized meaning. The term specifically may refer, without limitation, to a vector whose length is the shortest distance from the initial to the final position of a point P undergoing motion. It quantifies both the distance and direction of the net or total motion along a straight line from the initial position to the final position of the point trajectory. A displacement may be identified with the translation that maps the initial position to the final position. A displacement may be also described as a relative position resulting from the motion, that is, as the final position xf of a point relatively to its initial position xᵢ. The corresponding displacement vector can be defined as the difference between the final and initial positions s = x_{f} - xᵢ = Δx.

The method may further comprises a final manual adjustment in position and/or axis orientation of at least one of the punching dies before a virtual cutting process generating the insertion holes. Thereby, an adjustment of the position of the punching die may be carried out.

For example, the position of the at least one insertion hole may be automatically or manually adjusted.

The method may further comprise virtually removing splint material (cutting process) in the intersection regions with the virtual punching dies resulting in a dental splint with defined insertion holes.

The method may further comprise defining each of the insertion holes with a size adapted to a size of the interdental brush. Thus, the size of insertion holes may be individually adapted so as to conform with the size of an interdental brush. In this respect, it has to be noted that the size of interdental brushes is standardized in ISO 16409. Thus, the size of the insertion hole can be defined by knowing the size of the interdental brush. The brush size, which is a number between 0 (small space between teeth) and 8 (large space), indicates the passage hole diameter. This corresponds to the space between two teeth that is just sufficient for the brush to go through without bending the wire.

The insertion holes may be defined with a size adapted to a maximum size of the interdental brush. Thus, all sizes of interdental brushes fit into the insertion holes.

A diameter of the insertion holes may be defined to be 0.02 mm to 2.5 mm larger than a diameter of the interdental brush. Thus, any obstruction of the interdental brush within the insertion hole is reliably prevented.

The additive manufacturing method may include 3-D-printing. The term "3D-printing" as used herein is a broad term and is to be given its ordinary and customary meaning to a person of ordinary skill in the art and is not to be limited to a special or customized meaning. The term specifically may refer, without limitation, to the construction of a three-dimensional object from a CAD model or a digital 3D model. The term "3D printing" can refer to a variety of processes in which material is joined or solidified under computer control to create a three-dimensional object, with material being added together (such as liquid molecules or powder grains being fused together), typically layer by layer. One of the key advantages of 3D printing is the ability to produce very complex shapes or geometries that would be otherwise impossible to construct by hand, including hollow parts or parts with internal truss structures to reduce weight. Fused deposition modeling, or FDM, and digital light processing, or DLP, are common 3D printing process in use.

The method may further comprise employing a computer program including computer-executable instructions for performing the method on the computer. The computer program may be a dental design software.

In a second aspect, not forming part of the claimed invention, a dental splint obtainable or obtained by a method according to a method according to the above details is disclosed.

In a third aspect, not forming part of the claimed invention, a dental splint comprising insertion holes for insertion of an interdental brush is disclosed.

The insertion holes may have a position, dimension and extension adapted to geometric data of a patient's teeth and gingiva. With other words, the insertion holes are individually formed corresponding to patient's teeth and gingiva parameter.

Further disclosed and proposed herein is a computer program including computer-executable instructions for performing the method according to the present invention in one or more of the embodiments enclosed herein when the program is executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of the method steps as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an image of a top view of a patient's teeth and gingiva;
- Figure 2: shows a lower view of a regular dental splint;
- Figure 3: shows the inner side of a virtual 3D model of the dental splint;
- Figure 4: shows an image of a partial lateral view of the patient's teeth and gingiva;
- Figure 5: shows the image of a top view of a patient's teeth and gingiva during preparation of the model;
- Figure 6: shows an inner side of the model of the dental splint during preparation of the model;
- Figure 7: shows a punching die after coordinate transformation;
- Figure 8: shows all punching dies after coordinate transformation;
- Figure 9: shows a punching die that needs correction;
- Figure 10: shows a model of the dental splint including all punching dies;
- Figure 11: shows the model of the dental splint after removing the splint material in the intersection volume of splint and punching die;
- Figure 12: shows the model of the dental splint after use of all punching dies seated on the corresponding model; and
- Figure 13: shows a manufactured dental splint including insertion holes.

### Detailed description of the embodiments

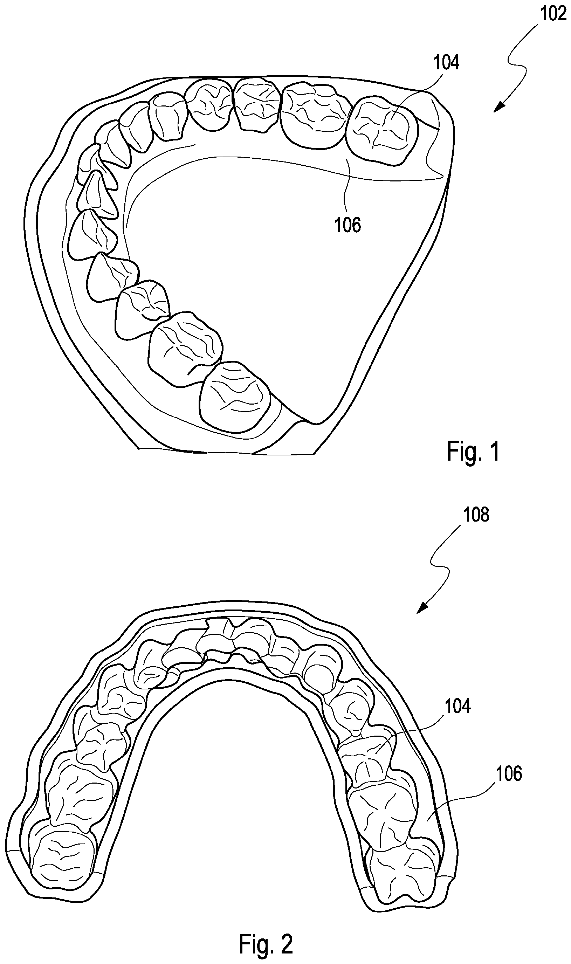

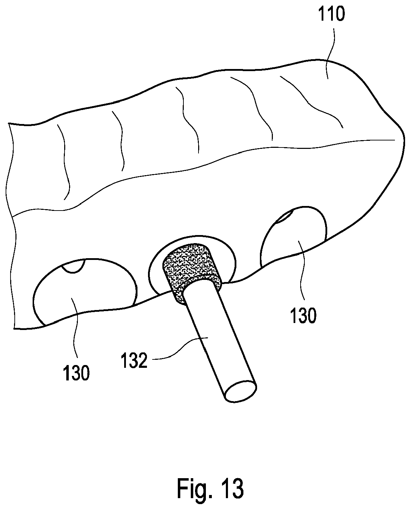

Figure 1 shows a first step of a method for manufacturing a dental splint 100 (Figure 13). The method includes making at least one image 102 of a patient's teeth 104 and gingiva 106. Figure 1 shows an image 102 of a top view of a patient's teeth 104 and gingiva 106. Merely as an example, the image 102 is taken from a lower jaw of the patient. The image 102 is a digital image. Thus, the image 102 may be made by a digital camera or a scanner. Needless to say, the image 102 may be an analogous image such as a photo or an dental imprint which are then converted into a digital image.

Figure 2 shows a lower view of a regular dental splint 108 including imprints of the patient's teeth 104 and gingiva 106 which serves as starting point of the present invention.

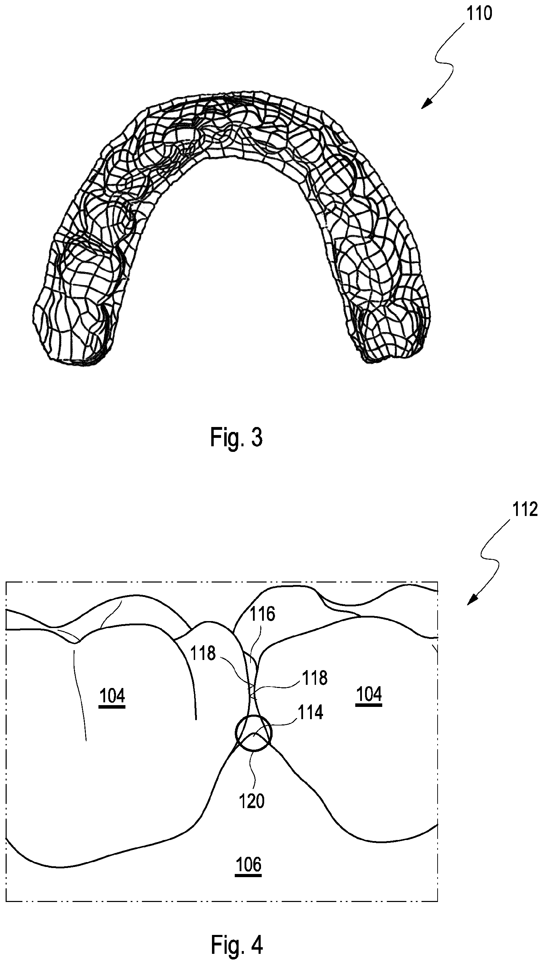

Figure 3 shows an inner side of a model 110 of the dental splint 100 for the patient's teeth 104 and gingiva 106. The model 110 is designed based on the image(s) 102 by means of a computer (not shown in detail). For example, the model 110 is a CAD model. In order to design the model 110, digital image data are obtained from the image(s) 102 and the model 110 is designed based on the digital image data by means of the computer. A computer program including computer-executable instructions for performing the method may be employed on the computer. The computer program may be a commercially available dental design software such as exocad.

Figure 4 shows an image 112 of a partial lateral view of the patient's teeth 104 and gingiva 106. The method further includes marking an uppermost position 114 of the gingiva 106 within a space 116 between approximal tooth surfaces 118 in the image 112. Figure 4 shows an exemplary circular marker 120 of the uppermost position 114 of the gingiva 106 within a space 116 between the approximal tooth surfaces 118.

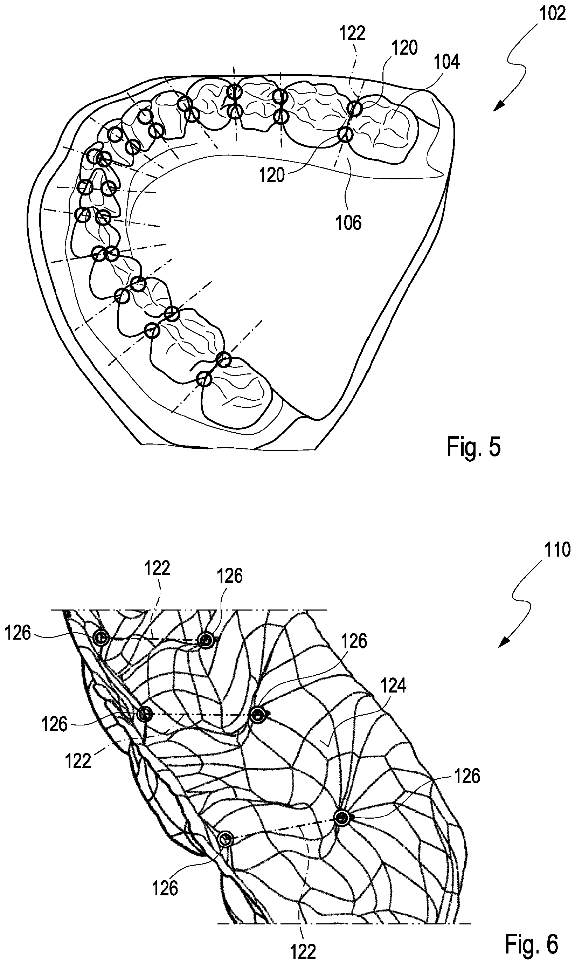

Figure 5 shows the image 102 of the top view of the patient's teeth 104 and gingiva 106 during preparation of the model 110. Particularly, Figure 5 shows markers 120 of the uppermost position 114 of the gingiva 106 within each space 116 between all approximal tooth surfaces 118. The uppermost position 114 may be an uppermost buccal position of the gingiva 106 and/or an uppermost oral position of the gingiva 106. Further, insertion axes 122 for insertion of interdental brushes within each space 116 between the approximal tooth surfaces 118 of the patient's teeth 104 are defined based on the uppermost positions 114 of the gingiva 106 within the space 116 between the approximal tooth surfaces 118 by means of the computer.

Figure 6 shows an inner side of the model 110 of the dental splint 100 during preparation of the model 110. An intersection point of the insertion axes 122 with an inner surface 124 of the model 110 of the dental splint 100 is used as reference points 126. Further, virtual punching dies 128 are defined. The reference points 126 are used for a position of punching dies 128. The virtual punching dies 128 are defined substantially cone-shaped or truncated cone-shaped. Particularly, the virtual punching dies 128 are defined substantially rotationally symmetrical. The punching dies 128 may be defined by rotating a point spaced apart from an insertion axis 122 and connecting the thus formed circle with an apex located on the insertion axis. For example, the punching dies 128 are defined as a cone having an apex angle of 25 ° to 55° and preferably from 30 ° to 45 °. Needless to say the punching dies 128 may have different apex angles. The punching dies 128 are defined by means of coordinates transformation calculated from the reference points 126 by the computer. For example, the coordinates transformation is made so as to process the data in a program such as Matlab^{®}. Further, the punching dies 128 are oriented with respect to the insertion axes 122.

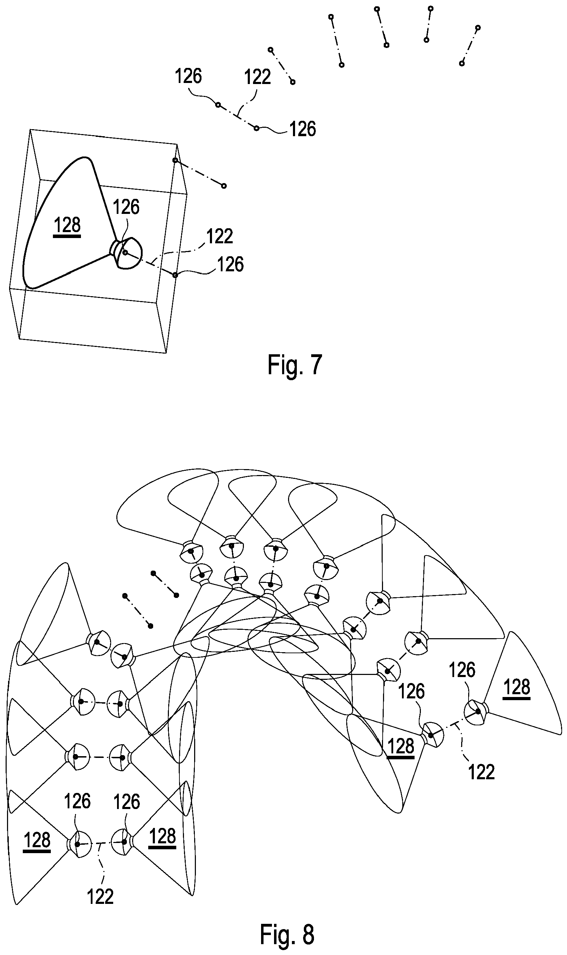

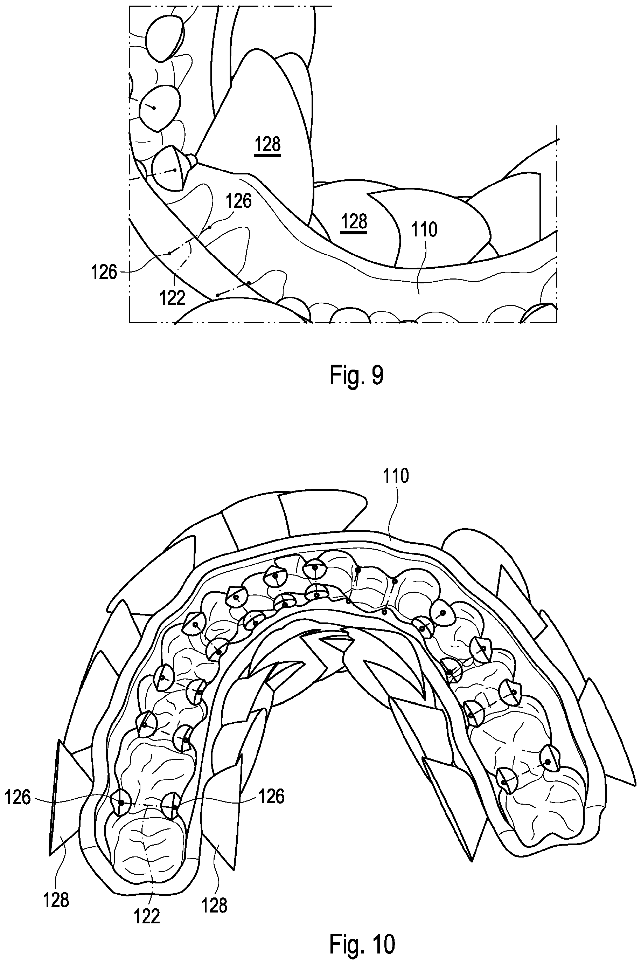

Figure 7 shows a punching die 128 after coordinate transformation. Figure 8 shows all punching dies 128 after coordinate transformation. Figure 9 shows a punching die 128 that needs correction of its orientation or position. The punching dies 128 are used for defining insertion holes 130 as they form the insertion holes 130 in the model 110. The position of at least one insertion hole 130 may be automatically or manually adjusted by adjusting the position of a punching die 128. For example, a position of a punching die may be corrected if it intersects an edge of the model 110 of the dental splint 100. Figure 10 shows the model 110 of a dental splint 100 including all punching dies 128 after adjusting the orientation or positon thereof. With other words, a final manual or automatic adjustment in position of at least one of the punching dies 128 before a cutting process generating the insertion holes 130 may be made.

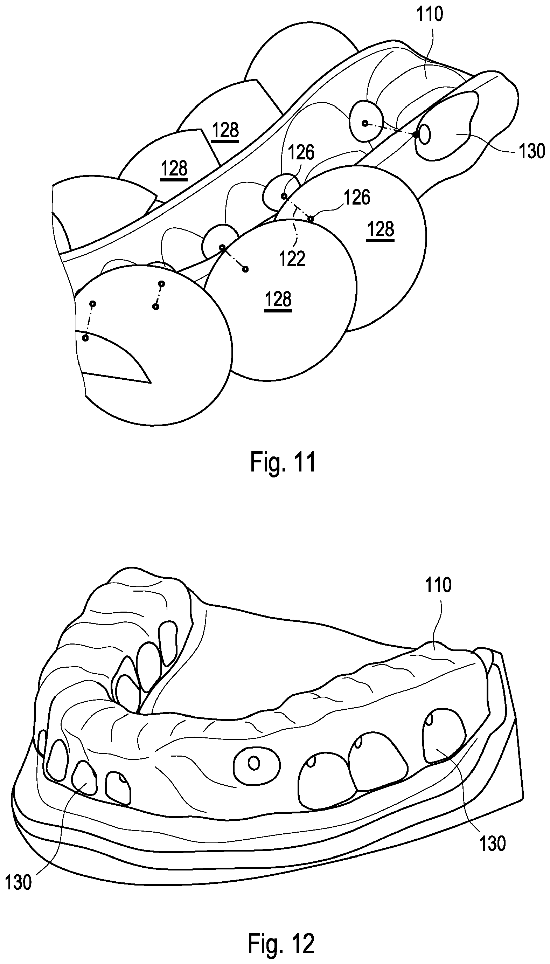

Figure 11 shows the model 110 of the dental splint after removing the splint material in the intersection volume of splint 100 and punching die 128. The method further comprises defining the insertion holes 130 for insertion of interdental brushes along the insertion axes 122 by means of the computer. For this purpose, splint material is virtually removed, such as in an imaginary or virtual cutting process, in the intersection regions with the virtual punching dies 128 resulting in a dental splint 100 with defined insertion holes.

Figure 12 shows the model 110 of the dental splint 100 after use of all punching dies 128 seated on the corresponding model 110. Accordingly, the thus formed insertion holes 130 can be seen. In this respect it has to be noted that each of the insertion holes 130 is defined with a size adapted to a size of the interdental brush. Thus, the insertion holes 130 of different dental splints 100 may be differ in size so as to be adapted to different interdental brushes with different sizes. Alternatively, the insertion holes 130 are defined with a size adapted to a maximum size of the interdental brush. In any case, a diameter of the insertion holes 130 may be defined to be 0.02 mm to 2.5 mm larger than a diameter of the interdental brush such as 1.5 mm.

Figure 13 shows a manufactured dental splint 100 including insertion holes 130. The dental splint 100 including the defined insertion holes 130 is made at least partially by means of an additive manufacturing method under control of the computer. The additive manufacturing method includes 3-D-printing. For this purpose, the data of the model 110 are sent to a 3-D-printer. Thus, the method may be carried out in-situ at a dentist's laboratory. For example, the dental splint may be made from a transparent material. Needless to say, any material complying with oral hygienic provisions and that can be handled with an additive manufacturing method may be used. As is further shown in Figure 13, an interdental brush 132 may be easily inserted into the insertion holes 130.

### List of reference numbers

- 100: dental splint
- 102: image
- 104: teeth
- 106: gingiva
- 108: dental splint
- 110: model
- 112: image
- 114: uppermost position of gingiva
- 116: space
- 118: approximal tooth surface
- 120: marker
- 122: insertion axes
- 124: inner surface
- 126: reference point
- 128: punching die
- 130: insertion hole
- 132: interdental brush

## Claims

1. A computer implemented method for manufacturing a dental splint (100), comprising
- making at least one image (102, 112) of a patient's teeth (104) and gingiva (106),
- designing a model (110) of the dental splint (100) based on the image (102, 112) of the patient's teeth (104) and gingiva (106) by means of a computer,
- defining insertion axes (122) for insertion of interdental brushes (132) within each space (116) between approximal tooth surfaces (118) of the patient's teeth (104) in the model (110) by means of the computer,
- defining insertion holes (130) for insertion of interdental brushes (132) along the insertion axes (122) by means of the computer, and
- making the dental splint (100) including the defined insertion holes (130) at least partially by means of an additive manufacturing method under control of the computer.

2. The method according to the preceding claim, further comprising obtaining digital image data from the image (102, 112) and designing the model (110) based on the digital image data by means of the computer.

3. The method according to any preceding claim, further comprising defining the insertion axes (122) based on an uppermost position (114) of the gingiva (106) within the space (116) between the approximal tooth surfaces (118) from the image (102, 112), particularly based on an uppermost buccal position of the gingiva (106) and/or an uppermost oral position of the gingiva (106).

4. The method according to any preceding claim, further comprising defining the insertion holes (130) so as to taper towards the space (116) between the approximal tooth surfaces (118).

5. The method according to any preceding claim, further comprising defining the insertion holes (130) by means of defining virtual punching dies (128) forming the insertion holes (130).

6. The method according to the preceding claim, wherein the virtual punching dies (128) are defined substantially cone-shaped or truncated cone-shaped.

7. The method according to the preceding claim, wherein the virtual punching dies (128) are defined substantially rotationally symmetrical.

8. The method according to any one of the three preceding claims, further comprising using an intersection point of the insertion axes (122) with an inner surface (124) of the model (110) of the dental splint (100) as reference points (126) for the position of the punching dies (128) and orienting the punching dies (128) with respect to the insertion axes (122).

9. The method according to the preceding claim, wherein the final punching die positions (128) are defined by means of reference points (126) and insertion axes (122) and corresponding rotation matrices and displacements calculated by the computer.

10. The method according to any one of the five preceding claims, further comprising a final manual adjustment in position and/or orientation of at least one of the punching dies (128) before a cutting process for generating the insertion holes (130).

11. The method according to the preceding claim, wherein the position of the at least one insertion hole (130) is automatically or manually adjusted.

12. The method according to any one of the seven preceding claims, further comprising virtually removing splint material in the intersection regions with the virtual punching dies (128) resulting in the model (110) of the dental splint (100) with defined insertion holes (130).

13. The method according to any preceding claim, further comprising defining each of the insertion holes (130) with a size adapted to a size of the interdental brush (132).

## Patentansprüche

1. Computerimplementiertes Verfahren zur Fertigung einer Zahnschiene (100), umfassend:
Erstellen von wenigstens einem Bild (102, 112) der Zähne (104) und des Zahnfleischs (106) eines Patienten, Entwerfen eines Modells (110) der Zahnschiene (100) basierend auf dem Bild (102, 112) der Zähne (104) und des Zahnfleischs (106) des Patienten mittels eines Computers, Definieren von Einsetzachsen (122) zum Einsetzen von Interdentalbürsten (132) in jedem Raum (116) zwischen approximalen Zahnflächen (118) der Zähne (104) des Patienten in dem Modell (110) mittels des Computers, Definieren von Einsetzlöchern (130) zum Einsetzen von Interdentalbürsten (132) entlang der Einsetzachsen (122) mittels des Computers und
Herstellen der Zahnschiene (100) mit den definierten Einsetzlöchern (130) wenigstens teilweise mittels eines additiven Fertigungsverfahrens unter Steuerung durch den Computer.

2. Verfahren gemäß dem vorstehenden Anspruch, ferner umfassend das Beziehen digitaler Bilddaten von dem Bild (102, 112) und das Entwerfen des Modells (110) basierend auf den digitalen Bilddaten mittels des Computers.

3. Verfahren gemäß einem der vorstehenden Ansprüche, ferner umfassend das Definieren der Einsetzachsen (122) basierend auf einer obersten Position (114) des Zahnfleischs (106) in dem Raum (116) zwischen den approximalen Zahnflächen (118) anhand des Bildes (102, 112), insbesondere basierend auf einer obersten bukkalen Position des Zahnfleischs (106) und/oder einer obersten oralen Position des Zahnfleischs (106).

4. Verfahren gemäß einem der vorstehenden Ansprüche, ferner umfassend das Definieren der Einsetzlöcher (130), so dass sie sich in Richtung des Raums (116) zwischen den approximalen Zahnflächen (118) verjüngen.

5. Verfahren gemäß einem der vorstehenden Ansprüche, ferner umfassend das Definieren der Einsetzlöcher (130) mittels Definition von virtuellen Stanzmatrizen (128), welche die Einsetzlöcher bilden (130).

6. Verfahren gemäß dem vorstehenden Anspruch, wobei die virtuellen Stanzmatrizen (128) im Wesentlichen kegelförmig oder kegelstumpfförmig definiert sind.

7. Verfahren gemäß dem vorstehenden Anspruch, wobei die virtuellen Stanzmatrizen (128) im Wesentlichen rotationssymmetrisch definiert sind.

8. Verfahren gemäß einem der drei vorstehenden Ansprüche, ferner umfassend das Verwenden eines Schnittpunktes zwischen den Einsetzachsen (122) und einer Innenfläche (124) des Modells (110) der Zahnschiene (100) als Bezugspunkte (126) für die Position der Stanzmatrizen (128) und das Ausrichten der Stanzmatrizen (128) im Hinblick auf die Einsetzachsen (122).

9. Verfahren gemäß dem vorstehenden Anspruch, wobei die endgültigen Positionen der Stanzmatrizen (128) durch Bezugspunkte (126) und Einsetzachsen (122) und entsprechende Rotationsmatrizen und Versätze definiert sind, die von dem Computer berechnet werden.

10. Verfahren gemäß einem der fünf vorstehenden Ansprüche, ferner umfassend eine endgültige manuelle Einstellung hinsichtlich der Position und/oder Ausrichtung von wenigstens einer der Stanzmatrizen (128) vor einem Schneidprozess zum Erzeugen der Einsetzlöcher (130).

11. Verfahren gemäß dem vorstehenden Anspruch, wobei die Position des wenigstens einen Einsetzlochs (130) automatisch oder manuell eingestellt wird.

12. Verfahren gemäß einem der sieben vorstehenden Ansprüche, ferner umfassend das virtuelle Entfernen von Schienenmaterial in den Schnittregionen zu den virtuellen Stanzmatrizen (128), wodurch sich das Modell (110) der Zahnschiene (100) mit definierten Einsetzlöchern (130) ergibt.

13. Verfahren gemäß einem der vorstehenden Ansprüche, ferner umfassend das Definieren von jedem der Einsetzlöcher (130), wobei eine Größe an eine Größe der Interdentalbürste (132) angepasst ist.

## Revendications

1. Procédé mis en œuvre par ordinateur pour fabriquer une gouttière dentaire (100), le procédé comprenant les étapes suivantes :
- réaliser au moins une image (102, 112) des dents (104) et de la gencive (106) d'un patient,
- concevoir un modèle (110) de la gouttière dentaire (100) sur la base de l'image (102, 112) des dents (104) et de la gencive (106) du patient au moyen d'un ordinateur,
- définir des axes d'insertion (122) pour l'insertion de brosses interdentaires (132) dans chaque espace (116) entre les surfaces dentaires approximatives (118) des dents du patient (104) dans le modèle (110) au moyen de l'ordinateur,
- définir des trous d'insertion (130) pour l'insertion de brosses interdentaires (132) le long des axes d'insertion (122) au moyen de l'ordinateur, et
- fabriquer la gouttière dentaire (100) comprenant les trous d'insertion définis (130) au moins partiellement au moyen d'un procédé de fabrication additif sous le contrôle de l'ordinateur.

2. Procédé selon la revendication précédente, comprenant en outre l'obtention de données d'image numériques à partir de l'image (102, 112) et la conception du modèle (110) sur la base des données d'image numériques au moyen de l'ordinateur.

3. Procédé selon l'une quelconque des revendications précédentes, comprenant en outre la définition des axes d'insertion (122) sur la base de la position la plus haute (114) de la gencive (106) à l'intérieur de l'espace (116) entre les surfaces dentaires approximatives (118) de l'image (102, 112), en particulier sur la base de la position buccale la plus haute de la gencive (106) et/ou de la position orale la plus haute de la gencive (106).

4. Procédé selon l'une quelconque des revendications précédentes, comprenant en outre de définir des trous d'insertion (130) de manière à ce qu'ils s'effilent vers l'espace (116) entre les surfaces dentaires approximatives (118).

5. Procédé selon l'une quelconque des revendications précédentes, comprenant en outre de définir les trous d'insertion (130) au moyen de la définition de matrices de poinçonnage virtuelles (128) formant les trous d'insertion (130).

6. Procédé selon la revendication précédente, dans lequel les matrices de poinçonnage virtuelles (128) sont définies sensiblement en forme de cône ou de tronc de cône.

7. Procédé selon la revendication précédente, dans lequel les matrices de poinçonnage virtuelles (128) sont définies de manière à être sensiblement symétriques par rapport à un axe de rotation.

8. Procédé selon l'une quelconque des trois revendications précédentes, comprenant en outre l'utilisation des points d'intersection des axes d'insertion (122) avec une surface intérieure (124) du modèle (110) de la gouttière dentaire (100) comme points de référence (126) pour la position des matrices de poinçonnage (128) et l'orientation des matrices de poinçonnage (128) par rapport aux axes d'insertion (122).

9. Procédé selon la revendication précédente, dans lequel les positions finales des matrices de poinçonnage (128) sont définies au moyen de points de référence (126) et d'axes d'insertion (122) et de matrices de rotation et de déplacements correspondants calculés par l'ordinateur.

10. Procédé selon l'une quelconque des cinq revendications précédentes, comprenant en outre un réglage manuel final de la position et/ou de l'orientation d'au moins une des matrices de poinçonnage (128) avant un processus de découpe pour générer les trous d'insertion (130).

11. Procédé selon la revendication précédente, dans lequel la position de l'au moins un trou d'insertion (130) est ajustée automatiquement ou manuellement.

12. Procédé selon l'une quelconque des sept revendications précédentes, comprenant en outre l'enlèvement virtuel du matériau de la gouttière dans les régions d'intersection avec les matrices de poinçonnage virtuelles (128), ce qui résulte en un modèle (110) de gouttière dentaire (100) avec des trous d'insertion définis (130).

13. Procédé selon l'une quelconque des revendications précédentes, comprenant en outre la définition de chacun des trous d'insertion (130) avec une taille adaptée à une taille de la brosse interdentaire (132).
